# EUROPEAN PATENT SPECIFICATION

(11) **EP 3 027 092 B1**
(45) Date of publication and mention of the grant of the patent: **06.11.2019**
(21) Application number: 14814706.9
(22) Date of filing: 31.07.2014
(51) Int. Cl.: A47J 31/10, A47J 31/56

(54) **A HOT BEVERAGE PREPARATION MACHINE**
MASCHINE ZUR ZUBEREITUNG HEISSER GETRÄNKE
MACHINE DE PRÉPARATION DE BOISSONS CHAUDES

(30) Priority: 02.08.2013 TR 201309437
(43) Date of publication of application: 08.06.2016
(73) Proprietor: Arçelik Anonim Sirketi, 34445 Istanbul (TR)
(72) Inventor: AKGUL, Ozkan, 34950 Istanbul (TR); HATIPOGLU, Oner, 34950 Istanbul (TR); OCAK, Mehmet, Salih, 34950 Istanbul (TR); YUCE, Ahmet, Ihsan, 34950 Istanbul (TR)
(86) International application number: PCT/TR2014/000297
(87) International publication number: WO 2015/016801

(56) References cited:
- EP-A1- 2 005 865
- US-A- 5 862 738
- US-A1- 2004 226 452

## Description

The present invention relates to a hot beverage preparation machine comprising a control unit.

In hot beverage preparation machines, the water filled into the water container is heated by means of a portable water heater and is transferred to the brewing chamber containing raw material of the beverage to be prepared. The water container, energized by means of the platform whereon it is placed, not only heats the water and but also enables the heated water to be transferred to the brewing chamber. Water heating and water transfer processes are realized by the control unit by means of the water heater, the temperature sensor and the pump disposed on the water container. During the water transfer process, the user may take the water container off the platform due to reasons of adding water into the water container or pouring water from the water container. Taking the water container off the platform causes the water transfer time hence the amount of water transferred to the brewing chamber to be calculated inaccurately and the brewing quality to decrease.

In the state of the art hot beverage preparation machines explained in the International Patent Application No WO2004008922, in the European Patent Application No. EP2005865 and in the German Patent Application No. DE19857165, the brewing chamber and the pot are positioned one above the other and the water container is situated side by side with the brewing chamber and the pot.

The aim of the present invention is the realization of a hot beverage preparation machine, the brewing performance of which is increased.

The hot beverage preparation machine realized in order to attain the aim of the present invention and explicated in the claims, performs the sequential process steps like heating the water in the water container while preparing the hot beverage, transferring the water into the brewing chamber when the water reaches a certain; temperature, and performing the brewing process for a predetermined brewing time.

The hot beverage preparation machine comprises a water container, a water heater enabling the water filled into the water container to be heated, a temperature sensor that is disposed on the water container and that measures the temperature of water, a brewing chamber wherein the brewing process is performed as a result of the interaction between beverage raw material and water, a platform providing the transfer of electric energy and data to the water container, and a pump that is connected to the water container and that enables the water heated in the water container to be transferred to the brewing chamber during the water transfer process.

The hot beverage preparation machine of the present invention comprises a counter that measures the duration of hot beverage preparation process steps and a control unit that controls the temperature sensor at time intervals predetermined by the producer, that detects whether or not the water container is on the platform and that stops the pump and the counter if the temperature sensor is not operating. The temperature sensor is deactivated when the water container, performing information exchange with the control unit through the platform, is taken off the platform due to reasons like adding water or pouring water during the water transfer process. If data cannot be received from the temperature sensor that is controlled at time intervals predetermined by the producer, it is decided that the contact between the water container and the platform is lost, and the counter is stopped. By stopping the counter while the pump is not operating, the time duration the water is transferred and hence the amount of water transferred to the brewing chamber can be calculated without error. Consequently, the quality of brew and taste is preserved.

In an embodiment of the present invention, the hot beverage preparation machine comprises a pump operation time predetermined by the producer and the realized pump operation time that is equal to the time period the water in the water container is transferred to the brewing chamber. The control unit reactivates the pump when data is started to be received from the temperature sensor again and operates the pump until the realized pump operation time reaches the pump operation time predetermined by the producer. At times when the pump does not operate, the counter stops in tandem with the pump. Consequently, the time periods the water is transferred to the brewing chamber and the pump is operated are added up during the water transfer process and the amount of water transferred into the brewing chamber is controlled.

In an embodiment of the present invention, the temperature sensor and the pump operate sequentially at different times during the process of water transfer from the water container into the brewing chamber. In this embodiment, while one the pump and the temperature sensor is activated, the other is deactivated. Thus, energy can be delivered to the temperature sensor and the pump by the same connector. The pump is stopped momentarily at the frequency predetermined by the producer in order to detect whether or not the water container is on the platform and thus measurement is received from the temperature sensor. In this embodiment, while the structure that provides data and energy flow among the platform, the pump and the temperature sensor is simplified, the amount of water transferred to the brewing chamber is also controlled. Thus, brewing quality is not affected by the intervention of the user.

In an embodiment of the present invention, the hot beverage preparation machine comprises a water transfer process wherein the water in the water container is transferred into the brewing chamber and a warning means that gives a warning if the contact of the water container with the platform is interrupted during the water transfer process.

By means of the present invention, when the water container is lifted off the platform during the water transfer process, the pump that is deenergized is deactivated. By stopping the counter while the pump is deactivated, the realized pump operation time is determined and the amount of water transferred into the brewing chamber is calculated accurately. Consequently, the quality of brew and taste is improved.

The hot beverage preparation machine realized in order to attain the aim of the present invention is illustrated in the attached figures, where:

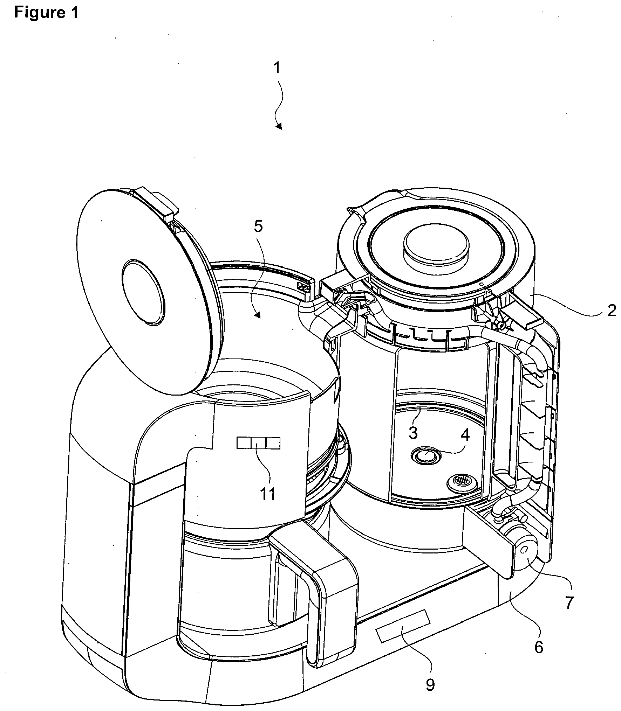

Figure 1 - is the schematic view of a hot beverage preparation machine .

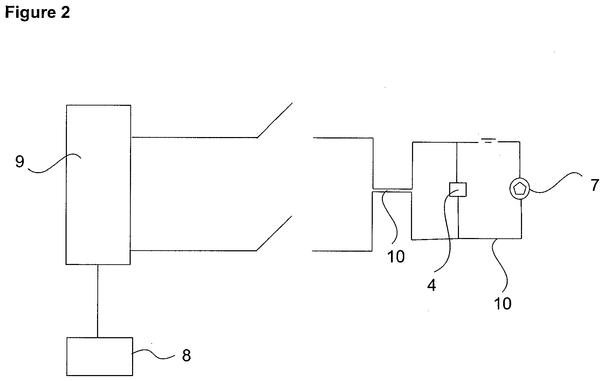

Figure 2 - is the control circuit diagram of the hot beverage preparation machine.

The elements illustrated in the figures are numbered as follows:
1. Hot beverage preparation machine
2. Water container
3. Water heater
4. Temperature sensor
5. Brewing chamber
6. Platform
7. Pump
8. Counter
9. Control unit
10. Connector
11. Warning means

The following symbols are used for explicating the hot beverage preparation machine (1) of the present invention:
(kf) : a frequency predetermined by the producer
(ps) : the pump operation time predetermined by the producer
(psg) : the realized pump operation time

The hot beverage preparation machine (1) comprises a water container (2) wherein water is filled, a water heater (3) enabling the water in the water container (2) to be heated, a temperature sensor (4) that is disposed on the water container (2) and that measures the temperature of the water heated in the water container (2), a brewing chamber (5) wherein the brewing process is performed as a result of the interaction between beverage raw material and water, a platform (6) the water container (2) placed thereon to be energized, and a pump (7) that is disposed on the water container (2) and that enables the water heated in the water container (2) to be transferred to the brewing chamber (5). The hot beverage preparation machine (1) prepares the hot beverage with sequential process steps like heating the water in the water container (2), and transferring water from the water container (2) to the brewing chamber (5) when water reaches a certain temperature.

The hot beverage preparation machine (1) of the present invention comprises a counter (8) that measures time and a control unit (9) that controls whether or not the temperature sensor (4) is operating at a frequency (kf) predetermined by the producer, and if measurement cannot be received from the temperature sensor (4), detects that the energy feeding the temperature sensor (4) is cut off hence the water container (2) is not on the platform (6) and stops the counter (8). When the contact between the water container (2) and the platform (6) is interrupted, electrical energy cannot be delivered to the temperature sensor (4) and the temperature sensor (4) is not active. If data cannot be received from the temperature sensor (4) that is controlled at the frequency predetermined by the producer, it is decided that the water container (2) is lifted off the platform (6). In this situation, the counter (8) is stopped while the water transfer process is kept at standby. The water transfer time the water is transferred to the brewing chamber (5) is calculated accurately by stopping the counter (8) as well when the pump (7) does not operate. Consequently, the quality of brew and taste is preserved.

In an embodiment of the present invention, the control unit (9) activates the counter (8) when measurement starts to be received from the temperature sensor (4) and enables the pump (7) to operate until the realized pump operation time (psg) reaches the pump operation time (ps) predetermined by the producer. Thus, the time periods the pump (7) is deactivated due to the water container (2) being lifted off the platform (6) are not included in the realized pump operation time (psg) and the counter (8) resumes to calculate the time when the water container (2) is placed on the platform (6) and the pump (7) is activated again. Thus, the amount of water transferred into the brewing chamber (5) is controlled.

In an embodiment of the present invention, the control unit (9) operates the temperature sensor (4) and the pump (7) alternately during the time period of water transfer from the water container (2) to the brewing chamber (5). In this embodiment, the temperature sensor (4) is deactivated while the pump (7) is activated. In order to detect whether or not the water container (2) is on the platform (6), measurement is received from the temperature sensor (4) by stopping the pump (7) momentarily at the frequency (kf) predetermined by the producer. Consequently, while the structure that provides data and energy transfer from the temperature sensor (4) and the pump (7) to the platform (6) is simplified, the amount of water transferred to the brewing chamber (5) can be controlled..

In an embodiment of the present invention, the hot beverage preparation machine (1) comprises a water transfer process wherein the water in the water container (2) is transferred into the brewing chamber (5) and a warning means (11) that gives a warning if the contact of the water container (2) with the platform (6) is interrupted during the water transfer process. Thus, the user is informed that the water container (2) is lifted off during the water transfer process.

By means of the present invention, the water transfer time and hence the amount of water delivered to the brewing chamber (5) is controlled. Since the total time period the water container (2) is not on the platform (6) during the water transfer process is not included in the realized pump operation time (psg), it does not cause a deviation in the water transfer time period. Predetermined brewing parameters are maintained independently from user intervention hence the brewing and taste quality are improved.

## Claims

1. A hot beverage preparation machine (1) comprising
- a water container (2) wherein water is filled,
- a water heater (3) that enables the water in the water container (2) to be heated,
- a temperature sensor (4) that is disposed on the water container (2) and that measures the temperature of the water heated in the water container (2),
- a brewing chamber (5) wherein the brewing process is performed as a result of the interaction between water and the beverage raw material,
- a platform (6) the water container (2) placed thereon to be energized and
- a pump (7) that is disposed on the water container (2) and that enables the water heated in the water container (2) to be transferred to the brewing chamber (5),
- a counter (8) that measures time,
**characterized by**
- a control unit (9) that controls whether or not the temperature sensor (4) is operating at a frequency (kf) predetermined by the producer, that detects that the water container (2) is not on the platform (6) if measurement cannot be received from the temperature sensor (4) and stops the counter (8).

2. A hot beverage preparation machine (1) as in Claim 1, **characterized by** the control unit (9) that activates the counter (8) when the temperature sensor (4) starts to operate and enables the pump (7) to operate until the realized pump operation time (psg) reaches the pump operation time (ps) predetermined by the producer.

3. A hot beverage preparation machine (1) as in Claim 1 or 2, **characterized by** the control unit (9) that operates the temperature sensor (4) and the pump (7) alternately during the time period of water transfer from the water container (2) to the brewing chamber (5).

4. A hot beverage preparation machine (1) as in any one of the above claims, **characterized by** a warning means (11) that gives a warning if the contact of the water container (2) with the platform (6) is interrupted during the water transfer process.

## Patentansprüche

1. Eine Heißgetränkezubereitungsmaschine (1) **umfasst**
- einen Wasserbehälter (2), worin Wasser gefüllt ist,
- einen Warmwasserbereiter (3), worin das Erwärmen des Wassers im Wasserbehälter (2) ermöglicht wird,
- einen Temperatursensor (4), der an dem Wasserbehälter (2) ist und die Temperatur des im Wasserbehälter (2) erwärmten Wassers misst,
- eine Brühkammer (5), in der der Brühvorgang als Resultat der Wechselwirkung zwischen Wasser und dem Getränkerohstoff durchgeführt wird,
- eine Plattform (6), auf der der Wasserbehälter (2) angeordnet ist, damit er angetrieben wird und
- eine Pumpe (7), die an dem Wasserbehälter (2) angeordnet ist und es ermöglicht, dass das im Wasserbehälter (2) erwärmte Wasser in die Brühkammer (5) befördert wird,
- einen Zähler (8), der die Zeit misst,
**gekennzeichnet ist durch,**
- eine Steuereinheit (9), die steuert, ob der Temperatursensor (4) mit einer von dem Hersteller vorgegebenen Frequenz (kf) arbeitet oder nicht; die erkennt, dass der Wasserbehälter (2) sich nicht auf der Plattform (6) befindet und wenn dies nicht möglich ist vom Temperaturfühler (4) empfangen wird und den Zähler (8) anhält.

2. Eine Heißgetränkezubereitungsmaschine (1), wie in Anspruch 1 aufgeführt, **ist dadurch gekennzeichnet, dass** die Steuereinheit (9) den Zähler (8) aktiviert, wenn der Temperatursensor (4) zu startet und die Pumpe (7) in Betrieb setzt, bis die reale Pumpenbetriebszeit (psg) erreicht wird, die die vom Hersteller vorgegebene Pumpenbetriebszeit (ps) ist.

3. Eine Heißgetränkezubereitungsmaschine (1), wie in Anspruch 1 oder 2 aufgeführt, **ist dadurch gekennzeichnet, dass** die Steuereinheit (9) den Temperatursensor (4) und die Pumpe (7) abwechselnd während des Zeitraums der Wasserübertragung vom Wasserbehälter (2) zur Brühkammer (5), betreibt.

4. Eine Heißgetränkezubereitungsmaschine (1), wie in einem der vorherigen Ansprüchen aufgeführt, **ist dadurch gekennzeichnet, dass** seine Warneinrichtung (1) eine Warnung signalisiert, wenn der Kontakt des Wasserbehälters (2) mit der Plattform (6) während des Wasserübergabevorgangs unterbrochen wird.

## Revendications

1. Une machine de préparation de boissons chaudes (1) comprenant
- un réservoir d'eau (2) dans lequel l'eau est remplie,
- un chauffe-eau (3) qui permet de chauffer l'eau dans le réservoir d'eau (2),
- un capteur de température (4) qui est disposé sur le réservoir d'eau (2) et qui mesure la température de l'eau chauffée dans le réservoir d'eau (2),
- une chambre de percolation (5) dans laquelle le processus d'infusion est réalisé à la suite de l'interaction entre l'eau et la matière première pour boisson,
- une plate-forme (6) où le réservoir d'eau (2) est alimenté lorsqu'il est placé dessus et
- une pompe (7) qui est disposée sur le réservoir d'eau (2) et qui permet à l'eau chauffée dans le réservoir d'eau (2) d'être transférée dans la chambre de percolation (5),
- un compteur (8) qui mesure le temps,
**caractérisé par**
- une unité de commande (9) qui contrôle si le capteur de température (4) fonctionne ou non à la fréquence (kf) prédéterminée par le fabricant, qui détecte que le réservoir d'eau (2) n'est pas sur la plate-forme (6) lorsque la mesure ne peut pas être reçue du capteur de température (4) et arrête le compteur (8).

2. Une machine de préparation de boissons chaudes (1) selon la Revendication 1, **caractérisée par** l'unité de commande (9) qui active le compteur (8) lorsque le capteur de température (4) commence à fonctionner et permet à la pompe (7) d'opérer jusqu'à ce que le temps de fonctionnement de la pompe réalisé atteint le temps de fonctionnement de la pompe (ps) prédéterminé par le fabricant.

3. Une machine de préparation de boissons chaudes (1) selon la Revendication 1 ou 2, **caractérisée par** l'unité de commande (9) qui actionne le capteur de température (4) et la pompe (7) alternativement pendant la période de transfert de l'eau du réservoir d'eau (2) à la chambre de percolation (5).

4. Une machine de préparation de boissons chaudes (1) selon l'une quelconque des revendications précédentes **caractérisée par** un moyen d'avertissement (11) qui donne un avertissement lorsque le contact du réservoir d'eau (2) avec la plate-forme (6) est interrompu pendant le processus de transfert d'eau.
